# EUROPEAN PATENT SPECIFICATION

(11) **EP 3 242 811 B1**
(45) Date of publication and mention of the grant of the patent: **11.12.2019**
(21) Application number: 16704075.7
(22) Date of filing: 08.01.2016
(51) Int. Cl.: B60P 3/20, B60H 1/32

(54) **REMOVABLE EXTERNAL BULKHEAD FOR TRANSPORTATION REFRIGERATION UNIT**
ABNEHMBARE ÄUSSERE TRENNWAND ZUM TRANSPORT EINER KÜHLEINHEIT
CLOISON EXTÉRIEURE AMOVIBLE POUR UNITÉ DE RÉFRIGÉRATION DE TRANSPORT

(30) Priority: 09.01.2015 US 201562101635 P
(43) Date of publication of application: 15.11.2017
(73) Proprietor: Carrier Corporation, Farmington, Connecticut 06032 (US)
(72) Inventor: SAROKA, Mary D., Syracuse, New York 13221 (US); VOLINO, Frank A., Syracuse, New York 13221 (US)
(74) Representative: Dehns
(86) International application number: PCT/US2016/012675
(87) International publication number: WO 2016/112307

(56) References cited:
- EP-A1- 1 308 330
- DE-U1- 8 109 913
- NL-C- 79 171
- US-A- 4 956 978
- US-A- 5 588 301
- US-A- 5 927 090

## Description

### BACKGROUND

The subject matter disclosed herein relates to transportation refrigeration systems. More specifically, the present disclosure relates to managing and controlling air input into transportation refrigeration systems.

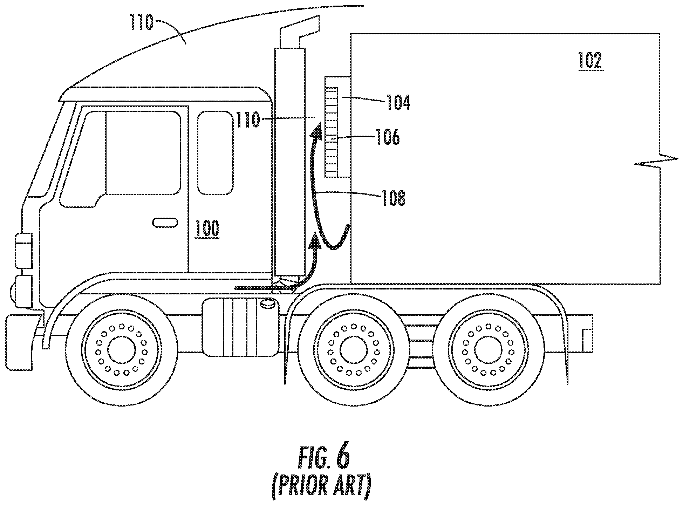

Referring to FIG. 6, on tractor-trailer applications, where a tractor 100 is coupled to and pulls a trailer 102, refrigeration units 104 for such applications (referred to as "transportation refrigeration units") are typically mounted to a front wall of the trailer 102, so the transportation refrigeration unit 104 is positioned between the tractor 100 and the trailer 102.

The transportation refrigeration unit 104 is contained in a housing, with the housing having a mesh or grated panel 106 on its front face as an intake for air into the condenser section of the transportation refrigeration unit 104. Due to its position at the front face between the tractor 100 and trailer 102, much of the air 108 passing through the panel 106 into the condenser section is actually recirculated air from a transportation refrigeration unit outlet and/or heat from the tractor engine, both of which are of high temperature compared to ambient temperature, and as a result reduce unit performance and efficiency.

The problem is exacerbated in tractor trailer systems that are equipped with fuel saving options. These options include routing tractor engine heat underneath the tractor 100, and also aerodynamic fairings 110 positioned on a roof of the tractor 100 and/or along a side of the tractor 100. The tractor engine heat routing results in an increase in high temperature exhaust air ingested by the transportation refrigeration unit, while the aerodynamic fairings 110 divert flow of lower temperature ambient air around the transportation refrigeration unit, so that the ambient air is much less likely to reach the panel 106

US 5972090A discloses the preamble of independent claim 1.

US 4956978A discloses a transport refrigeration system suitable for mounting on a truck.

### BRIEF SUMMARY

According to the invention, a cover for a transportation refrigeration unit includes a substantially solid front panel, one or more airflow inlet openings located at a top of the cover to direct an airflow from outside the cover into the transportation refrigeration unit, and one or more airflow outlet openings disposed below the one or more airflow inlet openings to direct the airflow from inside the transportation refrigeration unit to outside the cover.

A top panel may be operably connected to the front panel, the one or more airflow inlet openings positioned at the top panel.

The one or more airflow inlet openings may include one or more scoops to direct the airflow into the transportation refrigeration unit.

One or more baffles may be secured to the cover to direct the airflow from the one or more airflow inlet openings to a selected portion of the transportation refrigeration unit.

The one or more baffles may be formed integral to the cover.

One or more outlet baffles may be secured to the cover to direct the airflow from the transportation refrigeration unit to the one or more airflow outlet openings.

In another embodiment, a transportation refrigeration system includes a refrigeration unit operably connectible to a cargo compartment and configured to direct cooling airflow into the cargo compartment thereby cooling the cargo compartment to a selected temperature. A cover as in any preceding statement is secured to the refrigeration unit.

The cover may be installed over a condenser air mesh of the refrigeration unit.

In yet another embodiment, a refrigerated container system includes a container having a cargo compartment for transportation of a cargo and a transportation refrigeration unit according to the relevant preceding statements secured to the container.

### BRIEF DESCRIPTION OF THE DRAWINGS

FIG. 1 is a side view of an embodiment of a tractor-trailer system with a transportation refrigeration unit;
FIG. 2 is a perspective view of an embodiment of a transportation refrigeration unit;
FIG. 3 is a cross-sectional view of an embodiment of an airflow inlet for a transportation refrigeration unit;
FIG. 4 is a partially exploded view of an embodiment of a transportation refrigeration unit;
FIG. 5 is a side view of an embodiment of a transportation refrigeration unit; and
FIG. 6 is a side view of a prior tractor-trailer system.

The detailed description explains the invention, together with advantages and features, by way of examples with reference to the drawings.

### DETAILED DESCRIPTION

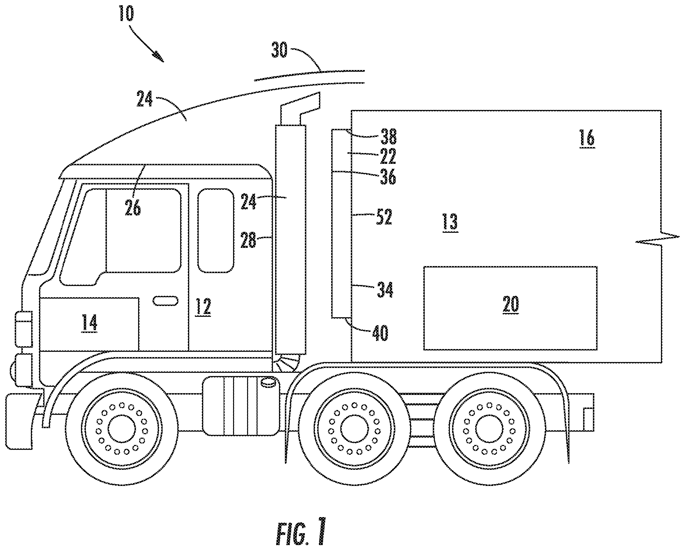

Shown in FIG. 1 is an exemplary embodiment of a tractor-trailer system 10. The system includes a tractor 12, or cab, which includes an engine 14 to drive the system 10, and compartment for the operator (not shown). The tractor 12 is coupled to a trailer 16, which includes a cargo compartment 18 to transport a cargo 20. A transportation refrigeration unit (TRU) 22 is coupled to the trailer 16 and provides cooling airflow into the cargo compartment 18 to maintain the cargo 20 at a selected temperature. While the term "trailer" is used throughout this description, one skilled in the art will readily appreciate that the subject matter disclosed herein may be applied to other refrigerated cargo container systems. The TRU 22 includes components typical of such a device, such as a compressor, a condenser, an expansion device and an evaporator that operate on a flow of refrigerant circulating through the TRU 22. In some embodiments, since tractor fuel consumption is a main driver in the cost of operating a tractor-trailer system 10, the tractor-trailer system 10 may include aerodynamic devices fixed to that tractor 12 and/or the trailer 16. These devices may include aerodynamic fairings 24 fixed to a roof 26 of the tractor 12 and/or fixed to a side 28 of the tractor 12 as shown in FIG. 1. It is to be appreciated, however, that the shown fairings 24 are merely exemplary, and fairings 24 of other shapes/sizes/locations may be utilized. The fairings 24 are configured to direct ambient airflow 30 around the tractor-trailer system 10 smoothly, thereby reducing fuel consumption.

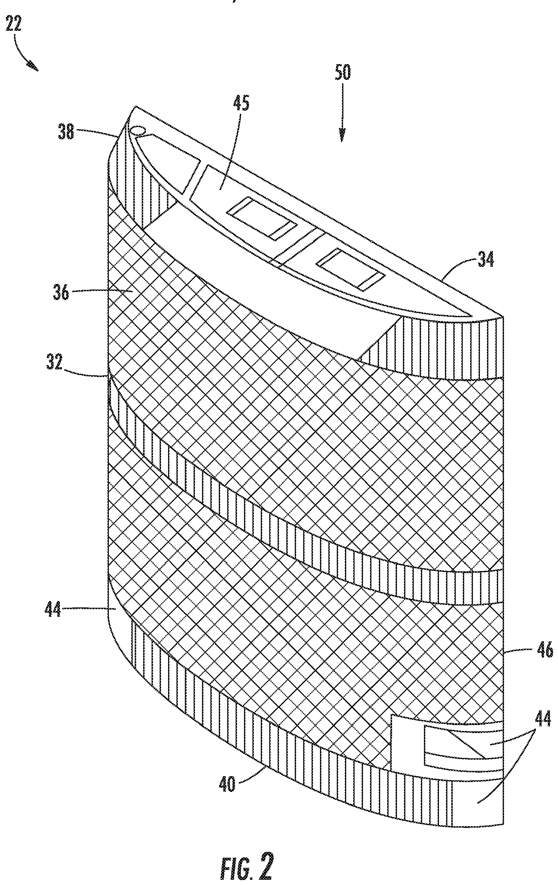

Referring to FIG. 2, the TRU 22 is contained in a housing 32 at a front wall 34 of the trailer 16. The housing 32 has a front panel 36, furthest from the front wall 34, and a top 38 and bottom 40. In a typical system, the front wall includes a mesh or grill to allow airflow into the TRU via the front wall. In many tractor-trailer systems, especially those with aerodynamic fairings, the airflow ingested through the grill is higher than ambient temperature, because the airflow often includes hot air ingestion from the tractor engine or from recirculating TRU outlet air. In the embodiments of the present disclosure, however, the front panel 36 is solid, and absent any airflow inlet. As shown in FIG. 2, airflow inlets 42 for the TRU 22 are located at the top 38 of the housing 32, and airflow outlets 44 are located at the bottom 40, or at a sidewall 46 of the housing 32. The airflow inlet 42 location at the top 38 of the housing 32 prevents hot air ingestion from the tractor engine or from recirculating TRU outlet air.

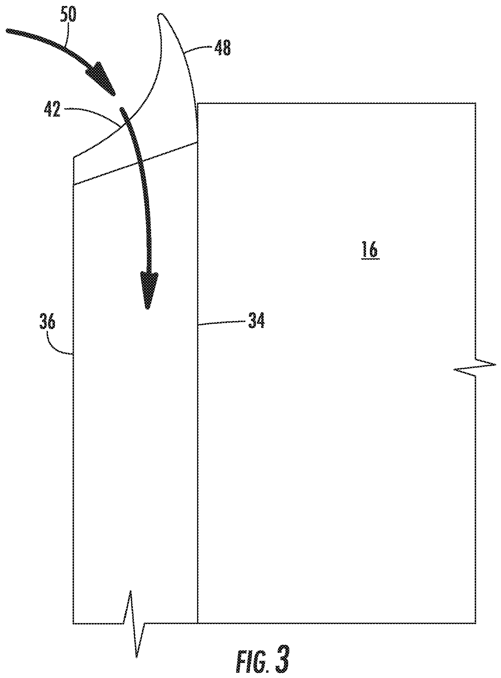

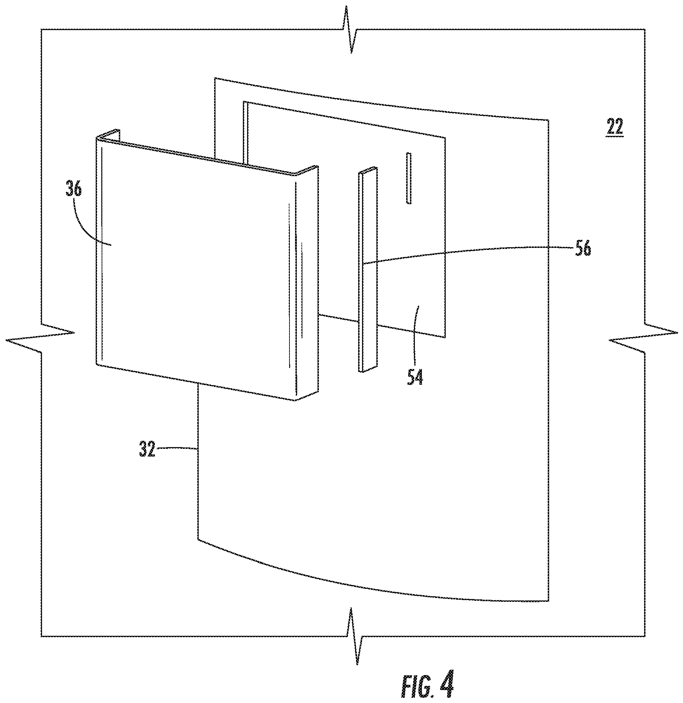

In some embodiments, as shown in FIG. 3, the airflow inlets 42 may include scoops 48 to divert and guide passing ambient airflow 50 into the airflow inlets 42. In some embodiments, such as the embodiment of FIG. 4, the front panel 36 is installed over an existing condenser air mesh 54 of the TRU 22, instead of replacing the condenser air mesh as in, for example, the embodiment of FIG. 2. The front panel 36 is secured over the econdenser air mesh 54 via, for example, a frame 56. The embodiment of FIG. 4 may be removed and installed as selected by a user, and may be added as an accessory after initial production of the TRU.

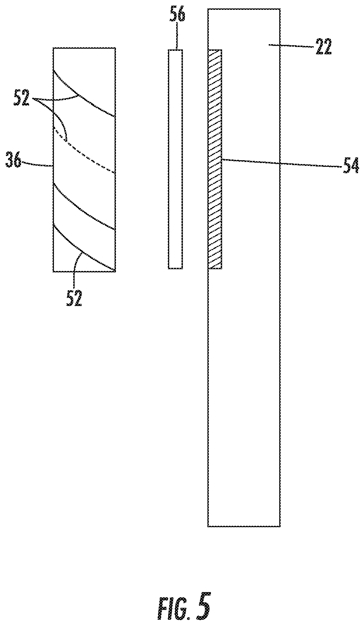

Referring now to FIG. 5, in some embodiments, the front panel 36 may include additional features, such as baffles 52, ribs or other such elements to guide airflow from the airflow inlets 42 to selected portions of the TRU 22, for example, the condenser. The baffles 52 are located between the front panel 36 and the TRU 22. In some embodiments, the baffles 52 are perforated, are mesh or otherwise include openings to allow airflow diffusion prior to entering the condenser. A solid baffle 52 may extend across the airflow inlet 42 at a bottom of the airflow inlet 42 to finally direct the airflow into the condenser. Further, additional outlet baffles may be utilized to guide exhaust airflow toward the airflow outlets 44. In one embodiment, the front panel 36 is formed from a plastic material by, for example, injection molding, blow molding or thermoforming. In some embodiments, scoops 46, baffles 52 and/or outlet baffles are formed integral to the front panel 36. Alternatively, the scoops 48, baffles 52 and/or outlet baffles may be formed independently from the front panel 36 and assembled thereto by fasteners and/or adhesives. The front panel 36 is secured to underlying structure of the TRU 22 and/or the housing 32 via fasteners, for example, screws.

Utilizing the front panel 36 of the present disclosure prevents hot air ingestion from the tractor engine or reingestion of TRU outlet airflow into the TRU resulting in performance improvement of the TRU. Further, this improvement is accomplished without redesign of the underlying TRU. Not only is performance improved by preventing ingestion of the high-temperature airflow into the TRU, but with this configuration, condenser performance is improved due to the condenser operation being changed from a front-feed of airflow to a top-feed of airflow.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A cover for a transportation refrigeration unit (22) comprising a substantially solid front panel (36), **characterised in that** it further comprises:
one or more airflow inlet openings (42) disposed at a top of the cover to direct an airflow from outside the cover into the transportation refrigeration unit (22);
one or more airflow outlet openings (44) disposed below the one or more airflow inlet (42) to direct the airflow from inside the transportation refrigeration unit (22) to outside the cover.

2. The cover of Claim 1, further comprising a top panel operably connected to the front panel, the one or more airflow inlet openings disposed at the top panel.

3. The cover of Claims 1 or 2, wherein the one or more airflow inlet openings include one or more scoops to direct the airflow into the transportation refrigeration unit.

4. The cover of any of Claims 1-3, further comprising one or more baffles secured to the cover to direct the airflow from the one or more airflow inlet openings to a selected portion of the transportation refrigeration unit.

5. The cover of Claim 4, wherein the one or more baffles are formed integral to the cover.

6. The cover of any preceding Claim, further comprising one or more outlet baffles secured to the cover to direct the airflow from the transportation refrigeration unit to the one or more airflow outlet openings.

7. A transportation refrigeration system comprising:
a refrigeration unit operably connectible to a cargo compartment and configured to direct cooling airflow into the cargo compartment thereby cooling the cargo compartment to a selected temperature; and
the cover of any of claims 1 to 6 secured to the refrigeration unit.

8. The system of Claim 7, wherein the cover is installed over a condenser air mesh of the refrigeration unit.

9. A refrigerated container system comprising:
a container having a cargo compartment for transportation of a cargo; and
the transportation refrigeration system of claim 7 or 8 secured to the container.

## Patentansprüche

1. Abdeckung für eine Transportkühleinheit (22), die eine im Wesentlichen feste Frontplatte (36) umfasst, **dadurch gekennzeichnet, dass** sie ferner Folgendes umfasst:
eine oder mehrere Luftstromeinlassöffnungen (42), die an einer Oberseite der Abdeckung angeordnet sind, um einen Luftstrom von außerhalb der Abdeckung in die Transportkühleinheit (22) zu leiten;
eine oder mehrere Luftstromauslassöffnungen (44), die unterhalb des einen oder der mehreren Luftstromeinlässe (42) angeordnet sind, um den Luftstrom von innerhalb der Transportkühleinheit (22) nach außerhalb der Abdeckung zu leiten.

2. Abdeckung nach Anspruch 1, ferner umfassend eine obere Platte, die mit der Frontplatte wirkverbunden ist, wobei die eine oder mehreren Luftstromeinlassöffnungen auf der oberen Platte angeordnet sind.

3. Abdeckung nach Anspruch 1 oder 2, wobei die eine oder mehreren Luftstromeinlassöffnungen eine oder mehrere Schaufeln zum Leiten des Luftstroms in die Transportkühleinheit einschließen.

4. Abdeckung nach einem der Ansprüche 1-3, ferner umfassend eine oder mehrere Ablenkplatten, die an der Abdeckung gesichert sind, zum Leiten des Luftstroms von der einen oder den mehreren Luftstromeinlassöffnungen zu einem ausgewählten Abschnitt der Transportkühleinheit.

5. Abdeckung nach Anspruch 4, wobei die eine oder mehreren Ablenkplatten einstückig mit der Abdeckung ausgebildet sind.

6. Abdeckung nach einem der vorhergehenden Ansprüche, ferner umfassend eine oder mehrere Auslassablenkplatten, die an der Abdeckung gesichert sind, zum Leiten des Luftstroms von der Transportkühleinheit zu der einen oder den mehreren Luftstromauslassöffnungen.

7. Transportkühlsystem, das Folgendes umfasst:
eine Kühleinheit, die mit einem Frachtraum wirkverbunden und dazu konfiguriert ist, einen Kühlluftstrom in den Frachtraum zu leiten, wodurch der Frachtraum auf eine ausgewählte Temperatur gekühlt wird; und
die Abdeckung nach einem der Ansprüche 1 bis 6, die an der Kühleinheit gesichert ist.

8. System nach Anspruch 7, wobei die Abdeckung über einem Kondensatorluftgitter der Kühleinheit installiert ist.

9. Gekühltes Behältersystem, das Folgendes umfasst:
einen Behälter, der einen Frachtraum zum Transport einer Fracht aufweist; und
das Transportkühlsystem nach Anspruch 7 oder 8, das an dem Behälter gesichert ist.

## Revendications

1. Couvercle pour une unité de réfrigération de transport (22) comprenant un panneau avant sensiblement plein (36), **caractérisé en ce qu'**il comprend en outre :
une ou plusieurs ouvertures d'admission de flux d'air (42) disposées au niveau d'un dessus du couvercle pour diriger un flux d'air de l'extérieur du couvercle à l'intérieur de l'unité de réfrigération de transport (22) ;
une ou plusieurs ouvertures de sortie de flux d'air (44) disposées en dessous des une ou plusieurs admissions d'air (42) pour diriger le flux d'air de l'intérieur de l'unité de réfrigération de transport (22) à l'extérieur du couvercle.

2. Couvercle selon la revendication 1, comprenant en outre un panneau supérieur fonctionnellement relié au panneau avant, les une ou plusieurs ouvertures d'admission de flux d'air disposées au niveau du panneau supérieur.

3. Couvercle selon les revendications 1 ou 2, dans lequel les une ou plusieurs ouvertures d'admission de flux d'air comprennent une ou plusieurs ouïes pour diriger le flux d'air à l'intérieur de l'unité de réfrigération de transport.

4. Couvercle selon l'une quelconque des revendications 1 à 3, comprenant en outre un ou plusieurs déflecteurs fixés au couvercle pour diriger le flux d'air des une ou plusieurs ouvertures d'admission de flux d'air à une portion sélectionnée de l'unité de réfrigération de transport.

5. Couvercle selon la revendication 4, dans lequel les un ou plusieurs déflecteurs sont formés en une seule pièce avec le couvercle.

6. Couvercle selon une quelconque revendication précédente, comprenant en outre un ou plusieurs déflecteurs de sortie fixés au couvercle pour diriger le flux d'air de l'unité de réfrigération de transport aux une ou plusieurs ouvertures de sortie de flux d'air.

7. Système de réfrigération de transport, comprenant :
une unité de réfrigération apte à être fonctionnellement reliée à un compartiment de cargaison et configurée pour diriger un flux d'air de refroidissement à l'intérieur du compartiment de cargaison de manière à refroidir le compartiment de cargaison à une température sélectionnée ; et
le couvercle selon l'une quelconque des revendications 1 à 6 fixé à l'unité de réfrigération.

8. Système selon la revendication 7, dans lequel le couvercle est installé au-dessus d'une grille d'air de condenseur de l'unité de réfrigération.

9. Système de conteneur réfrigéré comprenant :
un conteneur ayant un compartiment de cargaison pour le transport d'une cargaison ; et
le système de réfrigération de transport selon la revendication 7 ou 8 fixé au conteneur.
